# EUROPEAN PATENT APPLICATION

(11) **EP 2 632 140 A1**
(43) Date of publication of application: **28.08.2013**
(21) Application number: 12157114.5
(22) Date of filing: 27.02.2012
(51) Int. Cl.: H04M 3/56, H04M 1/247, H04M 1/2745, H04L 12/18

(54) **Apparatus and method pertaining to multi-party conference call actions**

(71) Applicant: Research In Motion Limited, Waterloo, ON N2L 3W8 (CA)
(72) Inventor: Greisson, Erik Artur, 211 40 Malmo (SE)
(74) Representative: Noble, Nicholas

(57) **Abstract**

A control circuit, during a multi-party conference call, provides a menu-based opportunity to a user to select at least one call-based action as regards individual parties to the multi-party conference call. This menu-based opportunity can comprise a user-selectable opportunity-selection zone on a touch-screen display. By one approach the call-based action can comprise an opportunity to selectively drop a particular party to the multi-party conference call. By another approach, in combination with the foregoing or in lieu thereof, the call-based action can comprise an opportunity to selectively split a particular party to the multi-party conference call away from the conference call to another call (such as, but not limited to, a held call).

## Description

### Field of Technology

The present disclosure relates to electronic communications devices and particularly to multi-party conference call capability.

### Background

Electronic communications devices are known in the art. These include, but are not limited to, two-way wireless communications devices such as so-called smartphones. Two parties are able to employ such devices to conduct two-way real-time verbal conversations with one another.

Some electronic communications devices can support multi-party conference calls. A multi-party conference call is a multi-way real-time combination of more than two calling/called parties. In many cases a call participant (or at least the call organizer) can add additional call participants to form or extend a multi-party conference call in a relatively straightforward manner. That said, existing approaches do not necessarily support all potentially-desired actions as regards managing the participant space.

Improvements in devices that support multi-party conference calls are desirable.

### Brief Description of the Drawings

FIG. 1 is a block diagram in accordance with the disclosure.

FIG. 2 is a perspective view in accordance with the disclosure.

FIG. 3 is a flow diagram in accordance with the disclosure.

FIG. 4 is a top plan view in accordance with the disclosure.

FIG. 5 is a top plan view in accordance with the disclosure.

FIG. 6 is a top plan view in accordance with the disclosure.

### Detailed Description

The following describes an apparatus and method pertaining to a control circuit that, during a multi-party conference call, provides a menu-based opportunity to a user to select at least one call-based action as regards individual parties to the multi-party conference call. This menu-based opportunity can comprise a user-selectable opportunity-selection zone on a touch-screen display.

By one approach the call-based action can comprise an opportunity to selectively drop a particular party to the multi-party conference call. By another approach, in combination with the foregoing or in lieu thereof, the call-based action can comprise an opportunity to selectively split a particular party to the multi-party conference call away from the conference call to another call (such as, but not limited to, a held call).

So configured, an electronic communications device can readily support additional functionality and capabilities that greatly expand the call-management opportunities that attend the conduct of a given multi-party conference call. This, in turn, can better facilitate fluid and dynamic changes to the make-up of the participants, including their relative availability, in a reliable, simple, and generally intuitive manner.

These teachings are readily applied in conjunction with numerous existing practices as pertain to multi-party conference calls and hence can serve to greatly leverage the continued viability and utility of such practices. These teachings are also highly scalable and can be employed with a variety of conference-call methodologies and essentially any number of conference call participants.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

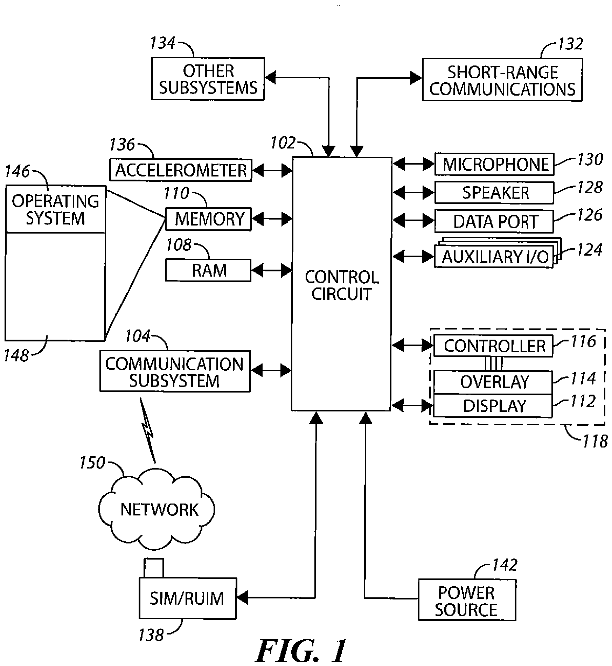

Referring to FIG. 1, an exemplary portable electronic device includes a control circuit 102 (such as a properly programmed processor) that controls the overall operation of the portable electronic device. Communication functions, including data and voice communications, are performed through a communication subsystem 104. The communication subsystem receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device.

The control circuit 102 interacts with other elements, such as a Random Access Memory (RAM) 108, a memory 110, a display 112 with a touch-sensitive overlay 114 operably coupled to an electronic controller 116 that together comprise an optional touch-sensitive display 118 (sometimes referred to herein as a touch-screen display), an auxiliary input/output (I/O) subsystem 124 (which might comprise, for example, a physical keyboard such as a full QWERTY keyboard), a data port 126, a speaker 128, a microphone 130, a short-range communication subsystem 132 (such as, for example, a Bluetooth-based short-range communication subsystem), and other device subsystems 134 of choice.

One or more user interfaces are provided. Input via a graphical user interface is provided via the touch-sensitive overlay 114. The control circuit 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the control circuit 102.

The control circuit 102 may interact with an accelerometer 136 that may be utilized to detect direction of gravitational forces or gravity-induced reaction forces.

To identify a subscriber for network access, the portable electronic device may utilize a Subscriber Identity Module or a Removable User Identity Module (SIM/RUIM) card 138 for communication with a network, such as the wireless network 150. Alternatively, user identification information may be programmed into the memory 110.

The portable electronic device includes an operating system 146 and software programs, applications, or components 148 that are executed by the control circuit 102 and are typically stored in a persistent, updatable store such as the memory 110. Additional applications or programs may be loaded onto the portable electronic device through the wireless network 150, the auxiliary I/O subsystem 124, the data port 126, the short-range communications subsystem 132, or any other suitable subsystem 134. The memory 110 may comprise a non-transitory storage media that stores executable code that, when executed, causes the control circuit 102 to carry out one or more of the functions or actions described herein.

A received signal such as a text message, an e-mail message, or web page download is processed by the communication subsystem and input to the control circuit 102. The control circuit 102 processes the received signal for output to the display 112 and/or to the auxiliary I/O subsystem 124. A subscriber may generate data items, for example e-mail messages, that may be transmitted over the wireless network 150 through the communication subsystem. For voice communications, the overall operation of the portable electronic device is similar. The speaker 128 outputs audible information converted from electrical signals and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. One or more touches, also known as touch contacts, touch events, or sometimes gestures may be detected by the touch-sensitive display 118. The control circuit 102 may determine attributes of the touch, including a location, direction, and/or extent of a touch. Touch location data may include data for an area of contact or data for a single point of contact, such as a point at or near a center of the area of contact.

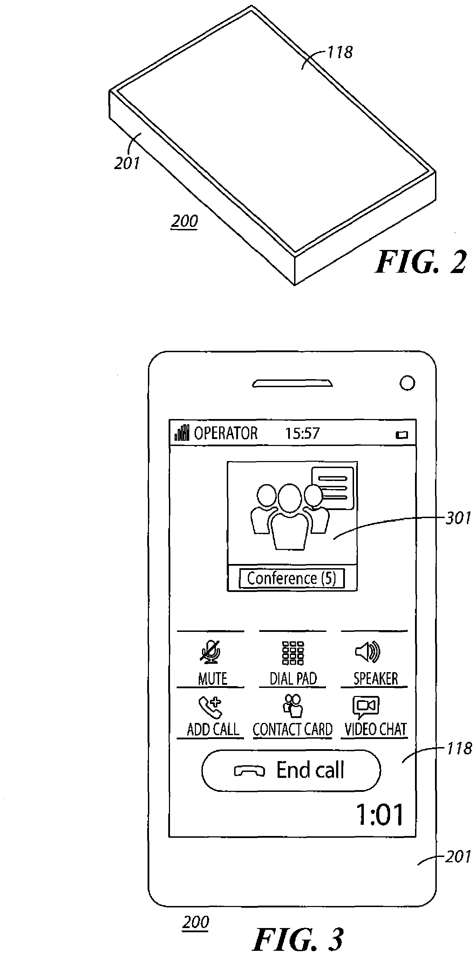

Referring to FIG. 2, for the sake of illustration but without intending any limitations in these regards, the following description will presume that the portable electronic device comprises a portable two-way wireless communications device 200 such as a so-called smartphone. Such a device 200 often comprises a housing 201 to contain the foregoing components including the aforementioned touch-screen display 118.

FIG. 3 provides an illustrative example of a portable two-way wireless communications device 200 during a multi-party conference call (via, for example, a wireless transceiver such as the aforementioned communication subsystem 104). During this mode of operation the device 200 presents on the touch-screen display 118 a conference call management icon/button 301. This icon/button 301, in this illustrative example, presents a numeric indication of the number of current participants in the conference call (in this case, "5").

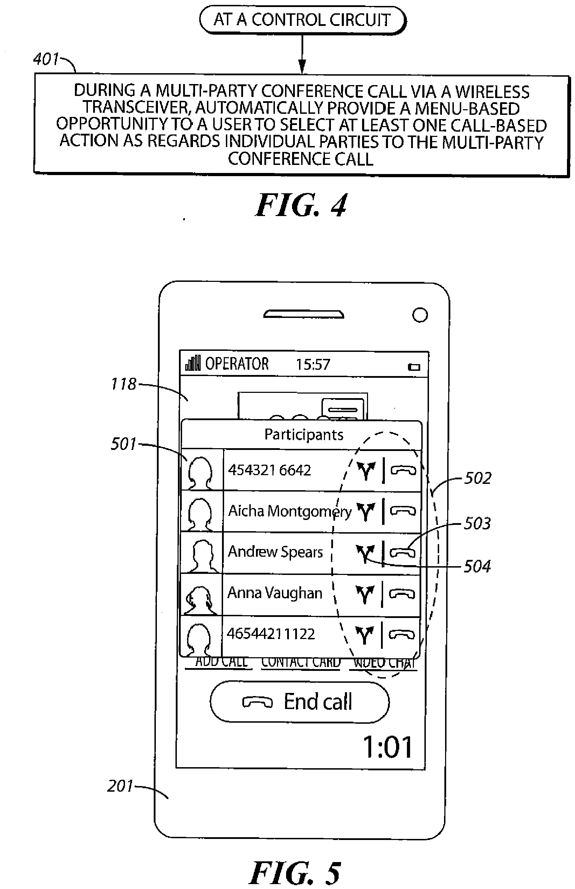

Referring to FIGS. 3, 4, and 5, upon asserting the aforementioned conference call management icon/button 301, the control circuit 102 automatically and responsively provides 401 a menu-based opportunity 501 as shown in FIG. 5 to a user (via, for example, the touch-screen display 118) to select at least one call-based action as regards individual parties to the multi-party conference call. This menu-based opportunity 501, in this example, presents a listing of the five call participants (i.e., persons who are presently a part of the existing conference call).

This listing includes both an image thumbnail for each participant along with a corresponding moniker and/or contact number (such as a telephone number). (By one approach, the control circuit 102 can obtain some or all of this identifying information by accessing, for example, a contacts list stored in the aforementioned memory 110.)

This menu-based opportunity 501 can include, as shown, a user-selectable opportunity-selection zone 502. In this example, this user-selectable opportunity-selection zone 502 includes a pair of selectable icons/buttons 503 and 504 for each of the listed participants. A first one of these icons/buttons 503 comprises an opportunity to selectively drop the corresponding party from the multi-party conference call. For example, asserting the icon/button 503 that corresponds to the participant named "Andrew Spears" will cause that participant to be dropped from the conference call. By one approach the display can then automatically return to the multi-party conference call management state shown in FIG. 3 (though of course the numeric indicator in this example will now switch from "5" to "4" as the number of participants is now reduced by one).

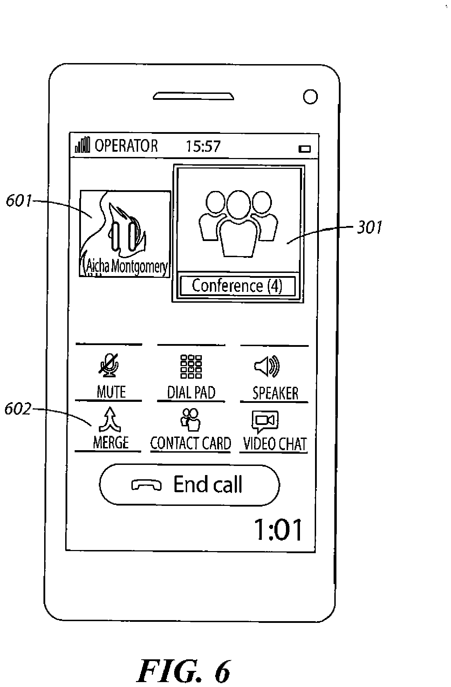

The other of the illustrated icons/buttons 504 represents an opportunity to selectively split the corresponding particular party away from the conference call to another call. By one approach this can comprise segregating this particular party into a separate call and then placing that separate call on hold. By one approach, upon taking this action the display can revert to a form of the multi-party conference call management screen as shown in FIG. 6 where an icon 601 that corresponds to the held call is displayed in conjunction with the conference call management icon/button 301. In this example the held-call icon 601 is placed behind the conference call management icon/button 301 and is grayed in order to convey it's "on-hold" status. A pause symbol can also be superimposed on this held-call icon 601 (as shown) to further convey this "on-hold" state.

As there are now two calls (the multi-party conference call on the one hand and the held call on the other hand) a merge capability 602 is now provided. By asserting this icon/button the user can rejoin the split-away party back into the conference call if they should so wish.

Such an approach can be useful, for example, to permit a brief, confidential side discussion amongst two or more conference-call participants. As a simple illustrative example in these regards, two parties and their respective attorneys can engage in a four-way conference call. One party can make an offer to the other party. The latter can, pursuant to these teachings, readily and easily place both the other party and their attorney on hold for a few moments in order to permit a confidential discussion regarding the offer with their own attorney. Upon reaching a decision, the parties on hold can then be rejoined to the conference to continue the discussion.

So configured, the user can drop or split away any of the parties to a multi-party conference call in a simple, straightforward, reliable, and intuitive way. The user also remains well informed as to which participants are presently on hold and excluded from the conference call.

These teachings will readily accommodate a large number of conference call participants and can greatly facilitate easily and quickly managing the inclusion and exclusion (temporarily or non-temporarily) of various specific participants with respect to a given conference call.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a wireless transceiver (104);
a touch-screen display (118);
a control circuit (102) operably coupled to the touch-screen display, the memory, and the wireless transceiver and configured to:
- during a multi-party conference call via the wireless transceiver, providing (401) a menu-based opportunity (501) to a user to select at least one call-based action as regards individual parties to the multi-party conference call.

2. The apparatus of claim 1 wherein the menu-based opportunity comprises a user-selectable opportunity-selection zone on the touch-screen display.

3. The apparatus of claim 1 wherein the at least one call-based action comprises an opportunity to selectively drop a particular party to the multi-party conference call.

4. The apparatus of claim 3 wherein the opportunity to selectively drop a particular party to the multi-party conference call comprises an opportunity to selectively drop any of the parties to the multi-party conference call.

5. The apparatus of claim 1 wherein the at least one call-based action comprises an opportunity to selectively split a particular party to the multi-party conference call away from the conference call to another call.

6. The apparatus of claim 5 wherein the another call comprises a held call.

7. The apparatus of claim 5 wherein the opportunity to selectively split a particular party to the multi-party conference call away from the conference call to another call comprises an opportunity to selectively split any of the parties to the multi-party conference call away from the conference call to another call.

8. A method comprising:
at a control circuit (102):
- during a multi-party conference call via a wireless transceiver (104), automatically providing (401) a menu-based opportunity (501) to a user to select at least one call-based action as regards individual parties to the multi-party conference call.

9. The method of claim 8 wherein the menu-based opportunity comprises a user-selectable opportunity-selection zone on a touch-screen display.

10. The method of claim 8 wherein the at least one call-based action comprises an opportunity to selectively drop a particular party to the multi-party conference call.

11. The method of claim 10 wherein the opportunity to selectively drop a particular party to the multi-party conference call comprises an opportunity to selectively drop any of the parties to the multi-party conference call.

12. The method of claim 8 wherein the at least one call-based action comprises an opportunity to selectively split a particular party to the multi-party conference call away from the conference call to another call.

13. The method of claim 12 wherein the another call comprises a held call.

14. The method of claim 12 wherein the opportunity to selectively split a particular party to the multi-party conference call away from the conference call to another call comprises an opportunity to selectively split any of the parties to the multi-party conference call away from the conference call to another call.

15. A non-transitory computer storage medium (110) having instructions stored therein, which instructions, when executed by a processor (102), cause the processor to:
during a multi-party conference call via a wireless transceiver (104), provide (401) a menu-based opportunity (501) to a user to select at least one call-based action as regards individual parties to the multi-party conference call.
